Europäisches Patentamt

European Patent Office

Office européen des brevets

(11) Publication number: **0 321 577**
**A1**

# EUROPEAN PATENT APPLICATION

published in accordance with Art. 158(3) EPC

(21) Application number: 88905423.5

(22) Date of filing: 14.06.88

Data of the international application taken as a basis:

(86) International application number:
**PCT/JP 88/00581**

(87) International publication number:
**WO 88/10456 (29.12.88 88/28)**

(51) Int. Cl.⁴: **G 05 B 19/415**

(30) Priority: 24.06.87 JP 157303/87

(43) Date of publication of application: 28.06.89
**Bulletin 89/26**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KAWAMURA, Hideaki, 1375-5 Narahara-machi Hachioji-shi, Tokyo 193 (JP)**
Inventor: **FUJIBAYASHI, Kentaro, 2-8-6, Nishikubo Musashino-shi, Tokyo 180 (JP)**
Inventor: **OTSUKI, Toshiaki, 4-10-7, Shinmei Hino-shi, Tokyo 191 (JP)**

(74) Representative: **Brunner, Michael John et al, GILL JENNINGS & EVERY 53-64 Chancery Lane, London WC2A 1HN (GB)**

(54) **INVOLUTE INTERPOLATION METHOD.**

(57) A involute interpolation method for numerically controlled machining. The direction (G03.1) of rotation of an involute curve, amount or angle of moving, center position $(X_0, Y_0)$ of a base circle, and the radius (R) of a base circle are designated for interpolation on the involute curve at regular intervals of distance or angle. The process is executed by a numerical control apparatus and pulse distribution is continued so that interpolation on an involute curve can performed without any particular programming device.

( G 03.1 )

BASE CIRCLE

ACTORUM AG

D E S C R I P T I O N

INVOLUTE INTERPOLATION METHOD

Technical Field

The present invention relates to an involute interpolation method for machining operations in a numerical control apparatus or the like, and more particularly to an involute interpolation method in which an involute curve can readily be interpolated in the numerical control apparatus.

Background Art

In a curve interpolation with a numerical control apparatus, interpolation of an involute curve has particularly been needed for machining gears, vanes of pumps and the like, and it has been a general practice to interpolate the involute curve with a computer or an NC program producing system which are distinctly provided from the numerical control apparatus to analyze a curve data into straight line data, whereupon numerical control machinings are performed with the use of a tape.

Accordingly, an instruction tape producing system has additionally been required other than the numerical control apparatus. In addition, the tape is extremely long because it contains minutely analyzed lines, so that the management of the tape is intricate. Furthermore, there has been a problem such that a pulse distribution is interrupted during a high-speed driving, and thus a smooth cutting operation is not ensured.

### Disclosure of the Invention

An object of this invention is to resolve the above problem and to provide an involute interpolation method in which an involute curve can readily be interpolated in the numerical control apparatus.

In order to resolve the above-noted problem, the invention provides an involute interpolation method for machining operations in a numerical control apparatus comprising the steps of:

instructing a rotational direction of an involute curve, a moving distance of the involute curve or a moving angle thereof, a center position of a base circle and a radius (R) of the base circle; and

interpolating the involute curve at every predetermined distance or every predetermined angle.

The rotational direction, the moving distance or moving angle, the center position of the base circle and the radius of the base circle are initially instructed to specify the involute curve.

From the given instructions, equations for the curve is determined and based upon such equations pulse interpolation is carried out at every predetermined moving distance or every predetermined angle.

The processings above are implemented with a numerical control apparatus so that a pulse distribution is continuously carried out.

Brief Description of the Drawings

Fig. 1(a) is a diagram showing an involute curve rotating in counterclockwise direction leaving from a base circle;

Fig. 1(b) is a diagram showing an involute curve rotating in counterclockwise direction approaching a base circle;

Fig. 1(c) is a diagram showing an involute curve rotating in clockwise direction approaching a base circle;

Fig. 1(d) is a diagram showing an involute curve rotating in clockwise direction leaving from a base circle; and

Fig. 2 is a diagram showing an outline of a numerical control apparatus according to one embodiment of the present invention.

Best Mode for Carrying Out the Invention

One embodiment of the present invention will be described with reference to the accompanying drawings.

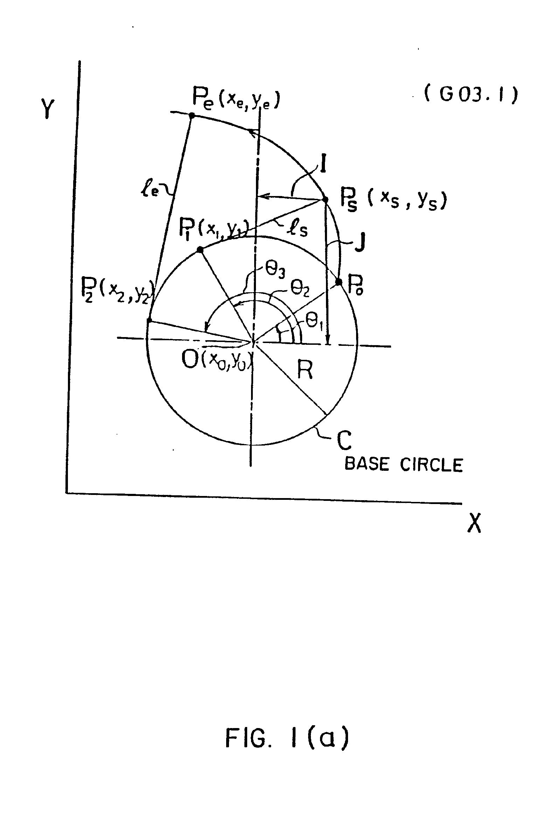

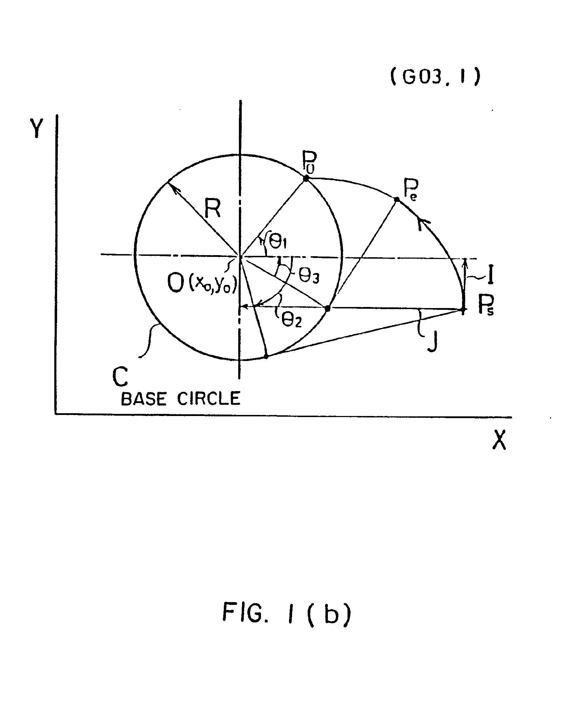

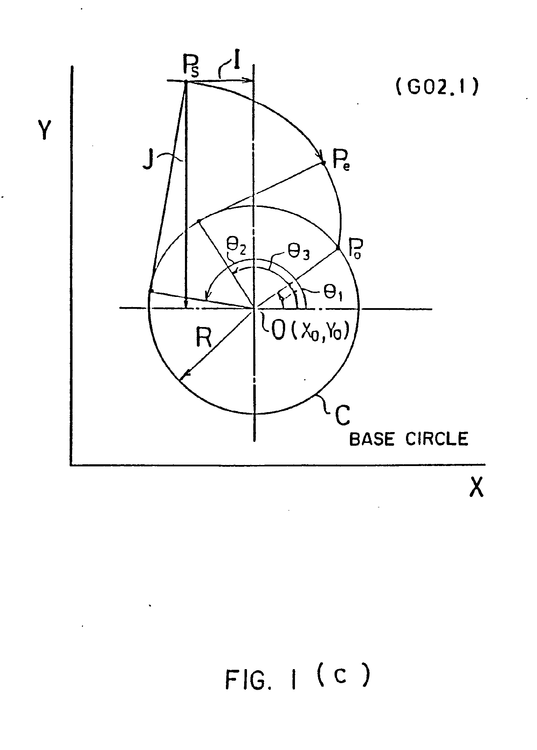

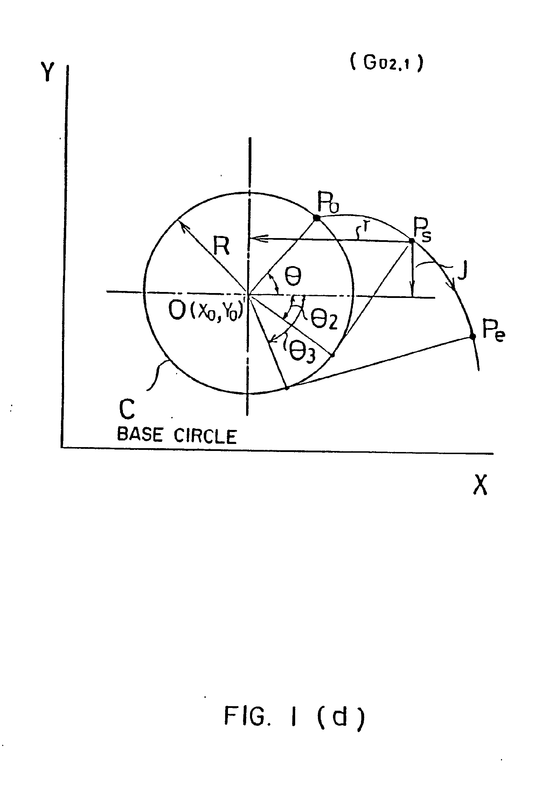

Involute curves are exemplified in Figs. 1(a) through 1(d).

Fig. 1(a) shows the involute curve rotating in counterclockwise direction leaving from a base circle, in which instruction of G03.1 is given.

Fig. 1(b) shows another involute curve rotating in counterclockwise direction approaching the base circle, in which instruction of G03.1 is given.

Fig. 1(c) shows still another involute curve rotating in clockwise direction approaching the base circle, in which instruction of G02.1 is given.

Fig. 1(d) shows yet another involute curve rotating in clockwise direction leaving from the base circle, in which instruction of G02.1 is given.

Although there exists four types of involute curves as above, those are the same in principle. Accordingly, description will be made with reference to the one in Fig. 1(a). In the figure, the involute curve is depicted with reference to a base circle C having a center represented on coordinates by O ($X_0$, $Y_0$) and a radius R. The involute curve starts with a point $P_0$ and an angle formed by a line connecting the point $P_0$ and the center O and an X axis is $\theta 1$.

A point Ps (Xs, Ys) is a start point for interpolation. A tangential line $\ell$s is drawn from this point to the base circle C and a point of contact of this tangential line with the base circle C is represented by P1 (X1, Y1). An angle that a line connecting the point P1 and the center O of the base circle intersects the X axis is represented by $\theta 2$.

A point Pe (Xe, Ye) is an end point for interpolation. From this point, a tangential line $\ell$e is drawn to the base circle C and the point of contact of this tangential line with the base circle C is represented by P2 (X2, Y2). An angle that a line connecting the point P2 and the center O of the base circle intersects the X axis is represented by $\theta 3$.

An instruction for the involute interpolation is given by G17G03.1X--Y--I--J--R--F--:. G17 is an instruction for specifying an X-Y plane, G18 for a Z-X plane and G19 for a Y-Z plane.

G03.1 is an instruction of interpolation for an involute curve rotating in a counterclockwise direction. Interpolation for an involute curve rotating in clockwise direction is given by G02.1. Whether the curve approaches the base circle or it leaves from the base circle is determined depending upon the coordinate values of the start and end points of the involute curve.

X--Y-- represents coordinates of the end point of the involute curve, which in the figure, corresponds to Pe (Xe, Ye). Instruction for this is made with an absolute value.

I--J-- is a value of the center of the base circle C as viewed from the start point Ps (Xs, Ys), which is instructed with an incremental value.

R-- is a radius of the base circle and F-- is a feeding speed. ";" is representative of an end-of-block.

Next, values for defining the involute curve are obtained based upon those instructions.

(1) Center Coordinate 0 of Base Circle

The coordinates of the start point Ps (Xs, Ys) of the involute curve are not contained in the instructions. However, such have been stored in the interior of the numerical control apparatus as a current position. Based upon a distance (I, J) from the start point Ps (Xs, Ys) to the center of the base circle of the involute curve as viewed from the start point, the center coordinates 0 ($X_0$, $Y_0$) of the base circle are obtained from the following equations.

$$X_0 = Xs + I$$
$$Y_0 = Ys + J$$

(2) Angle $\theta2$ at Start Point on Involute Curve

A tangential line $\ell$s is drawn to the base circle C from the start point Ps and the point of contact of this tangential line with the base circle C is represented by P1 (X1, Y1). Upon connecting the point P1 and the center O of the base circle C with a straight line, an angle that this line intersects the X axis is obtained. The angle thus obtained represents the angle $\theta 2$ of the start point on the involute curve.

(3) Angle $\theta 3$ at End Point on Involute Curve

A tangential line $\ell e$ is drawn to the base circle C from the end point Pe (Xe, Ye) on the involute curve and the point of contact of this tangential line with the base circle C is represented by P2 (X2, Y2). Upon connecting the point P2 and the center of the base circle C with a straight line, and an angle that this line intersects the X axis is defined as the angle $\theta 3$ of the end point on the involute curve.

(4) Curve Start point Angle $\theta 1$ of Involute Curve

A segment length between the point P1 and the point $P_0$ is equal to the length of the straight line $\ell s$ according to the definition of the involute curve. Accordingly, representing the length of the straight line $\ell s$ with L,

$$\theta 1 = \theta 2 - L/R \quad \text{(unit: radian)}$$

the curve start point angle $\theta 1$ of the involute curve can be obtained from the above equation.

(5) From the foregoing values, coordinates of an arbitrary point on the involute curve are given by the following

equations.

$$X = R \{\cos (\theta + \theta 1) + \theta \sin (\theta + \theta 1)\} + X_0$$

$$Y = R \{\sin (\theta + \theta 1) - \theta \cos (\theta + \theta 1)\} + Y_0$$

The angle $\theta$ is incremented at every predetermined value from $\theta = (\theta 2 - \theta 1)$ to $\theta = (\theta 3 - \theta 1)$ to sequentially obtain the points on the involute curve, whereupon the moving distances between adjacent two points are obtained and a straight line interpolation is performed with respect thereto. The involute curve can thus be interpolated.

From the above equation, three consecutively plotted points may be obtained while incrementing the angle $\theta$ at every predetermined angle so that the involute curve may be interpolated with a segment.

Although description has been made with respect to the interpolation method based upon specific instructions, the interpolation can be performed if instructions relating to the rotational direction of the involute curve, the moving distance, the radius of the base circle and its center coordinates are given, and equations for the interpolation may be modified in various way depending upon the format of instructions. Furthermore, the moving distance can be instructed by a moving angle as viewed from the center of the base circle.

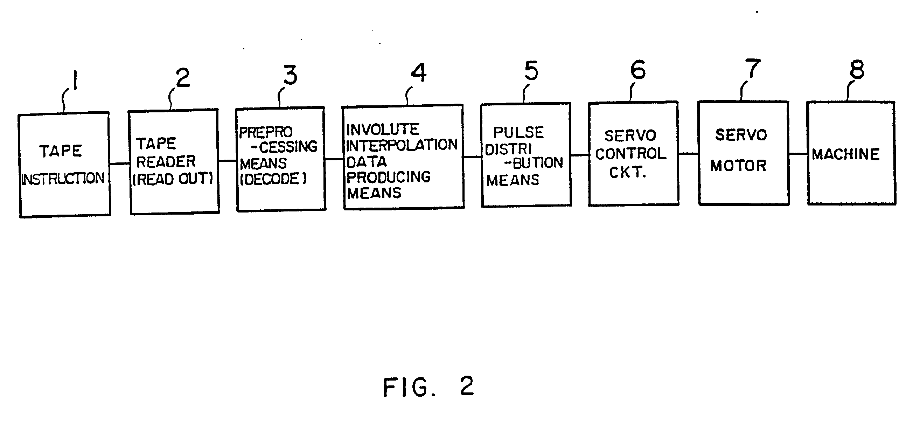

Next, description will be made with reference to an outline of a numerical control apparatus for carrying out the interplation of the involute curve. Fig. 2 is a diagram showing an outline of a numerical control apparatus according to this embodiment. A tape instruction 1 is a punched tape containing the afore-mentioned instructions, and a tape reader 2 reads the tape 1. A preprocessing means 3 discriminates an involute interpolation instruction from a G code. An involute interpolation data producing means 4 produces data needed for the involute interpolation from the instructions. Designated by reference numeral 5 is a pulse distribution means, in which from the data produced by the involute interpolation data producing means 4, $\theta$ is incremented at every predetermined angle to obtain the sequence of points on the involute curve, whereupon a line interpolation or a segmental interpolation and a pulse distribution are carried out. A servo control circuit 6 drives a servo motor in accordance with an instruction. The servo motor 7 moves a machine 8 through a ball screw, etc.

As described, according to the present invention, data for the interpolation of the involute curve is computed in the numerical control apparatus, and based upon the data thus computed the involute curve is interpolated with a straight line or the like. Accordingly, while dispensing with a specific program producing system or the like, the interpolation of the involute curve can be accomplished.

CLAIMS

1. An involute interpolation method for machining operations in a numerical control apparatus comprising the steps of:

instructing a rotational direction of an involute curve, a moving distance of the involute curve or a moving angle thereof, a center position of a base circle and a radius (R) of the base circle; and

interpolating the involute curve at every predetermined distance or every predetermined angle.

2. An involute interpolation method according to claim 1, wherein instructed are the rotational direction of the involute curve, coordinates of an end point, a center position of the base circle as viewed from a start point, and the radius (R) of the base circle; and

wherein coordinates $(X_0, Y_0)$ of the center of the base circle of the involute curve, an angle $(\theta 2)$ of the start point, an angle $(\theta 3)$ of the end point and a curve start angle $(\theta 1)$ on the basis of the instructions and coordinates (Xs, Ys) of the start point, and

with respect to an involute curve represented by

$$X = R \{\cos (\theta + \theta 1) + \theta \sin (\theta + \theta 1)\} + X_0$$

$$Y = R \{\sin (\theta + \theta 1) - \theta \cos (\theta + \theta 1)\} + Y_0$$

$\theta$ is incremented in a range from $\theta = (\theta 2 - \theta 1)$ to $\theta = (\theta 3 - \theta 1)$ at every predetermined value to obtain corresponding points on the involute curve.

3. An involute interpolation method according to claim 1, wherein a point-to-point space on the involute curve is interpolated with a straight line.

4. An involute interpolation method according to claim 1, wherein a point-to-point space of the involute curve is interpolated with a segment.

5. An involute interpolation method according to claim 1, further comprising the step of instructing a rotational speed of the involute curve.

6. An involute interpolation method according to claim 1, further comprising the step of instructing a designation of a plane.

( G 03. 1 )

FIG. 1 (a)

(G03.1)

FIG. 1 ( b )

FIG. 1 ( c )

( G$_{02,1}$ )

FIG. I (d)

| TAPE<br>INSTRUCTION | TAPE<br>READER<br>(READ OUT) | PREPRO<br>-CESSING<br>MEANS<br>(DECODE) | INVOLUTE<br>INTERPOLATION<br>DATA<br>PRODUCING<br>MEANS | PULSE<br>DISTRI<br>-BUTION<br>MEANS | SERVO<br>CONTROL<br>CKT. | SERVO<br>MOTOR | MACHINE |
|---|---|---|---|---|---|---|---|
| 1 | 2 | 3 | 4 | 5 | 6 | 7 | 8 |

FIG. 2

# INTERNATIONAL SEARCH REPORT

International Application No  PCT/JP88/00581

## I. CLASSIFICATION OF SUBJECT MATTER (if several classification symbols apply, indicate all) 6

According to International Patent Classification (IPC) or to both National Classification and IPC

Int.Cl⁴   G05B19/415

## II. FIELDS SEARCHED

### Minimum Documentation Searched 7

| Classification System | Classification Symbols |
|---|---|
| IPC | G05B19/415 |

### Documentation Searched other than Minimum Documentation to the Extent that such Documents are Included in the Fields Searched 8

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| A | JP, A, 49-101788 (Yaskawa Electric Mfg. Co., Ltd.) 26 September 1974 (26. 09. 74) Page 3, lower left column, line 8 to page 4, upper left column, line 20 (Family: none) | 1-7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 23, 1988 (23. 07. 88) | August 8, 1988 (08. 08. 88) |

| International Searching Authority | Signature of Authorized Officer |
|---|---|
| Japanese Patent Office | |

Form PCT/ISA/210 (second sheet) (January 1985)